# EUROPÄISCHE PATENTSCHRIFT

(11) **EP 4 182 995 B1**
(45) Veröffentlichungstag und Bekanntmachung des Hinweises auf die Patenterteilung: **31.07.2024**
(21) Anmeldenummer: 20753669.9
(22) Anmeldetag: 15.07.2020
(51) Int. Cl.: H01M 50/502, H01M 50/213

(54) **ENERGIESPEICHERMODUL ZUM SPEICHERN VON ELEKTRISCHER ENERGIE**
ENERGY STORAGE MODULE FOR STORING ELECTRIC ENERGY
MODULE DE STOCKAGE D'ÉNERGIE PERMETTANT DE STOCKER DE L'ÉNERGIE ÉLECTRIQUE

(43) Veröffentlichungstag der Anmeldung: 24.05.2023
(73) Patentinhaber: SCIO Technology GmbH, 63743 Aschaffenburg (DE)
(72) Erfinder: WEIS, Alexander, 63768 Hösbach (DE); NOLL, Michael, 63834 Sulzbach (DE); SEGER, Alexander, 63477 Maintal (DE)
(74) Vertreter: Angerhausen, Christoph
(86) Internationale Anmeldenummer: PCT/DE2020/100617
(87) Internationale Veröffentlichungsnummer: WO 2022/012704

(56) Entgegenhaltungen:
- WO-A1-2020/071642
- FR-A1- 3 077 431
- JP-A- 2016 091 959
- US-A1- 2015 180 093

## Beschreibung

Die Erfindung betrifft ein Energiespeichermodul zum Speichern von elektrischer Energie, mit einem eine Oberseite, eine Unterseite und einen im Wesentlichen rechteckigen Außenumfang aufweisenden Energiespeicher, wobei der Energiespeicher eine Mehrzahl Energiespeichereinheiten umfasst, von denen jede zumindest zwei benachbarte Energiespeicherzellen mit zur Oberseite und zur Unterseite des Energiespeichers ausgerichteten Polen aufweist, wobei die Pluspole jeder der Energiespeichereinheiten über einen ersten elektrisch leitenden Zellverbinder und die Minuspole über einen zweiten elektrisch leitenden Zellverbinder miteinander verbunden sind, und der erste Zellverbinder mit einer ersten und der zweite Zellverbinder mit einer zweiten Anschlusslasche elektrisch verbunden sind, wobei die Anschlusslaschen auf einer einer ersten Seitenfläche des rechteckigen Außenumfangs des Energiespeichers zugewandten Außenseite der Energiespeichereinheit angeordnet sind, wobei jeweils die erste Anschlusslasche der Energiespeichereinheiten über ein elektrisch leitendes Verbindungselement mit der zweiten Anschlusslasche der jeweils in einer Längsrichtung der ersten Seitenfläche benachbarten Energiespeichereinheit verbunden ist. Ein derartiges Energiespeichermodul ist beispielsweise bekannt aus der Druckschrift JP 2016-91959 A. Weitere Energiespeichermodule sind außerdem bekannt aus der WO 2020/071642, der FR 3 077 431 und der US 2015 / 0 180 093 A1.

Ein Problem von Energiespeichermodulen besteht darin, dass sich die Module im Betrieb, insbesondere bei hoher Belastung, stark aufheizen und infolgedessen ausdehnen. Diese temperaturabhängigen Volumenänderungen, insbesondere bezogen auf den Außenumfang der Energiespeicherzellen, haben zur Folge, dass die Energiespeicherzellen nicht unmittelbar aneinander anliegend nebeneinander angeordnet werden können, da aufgrund des entstehenden Drucks das Risiko besteht, dass die Energiespeicherzellen und die diese umgebende Infrastruktur, beziehungsweise das gesamte Energiespeichermodul zerstört werden. Daher ist es notwendig, dass bei der Fertigung von Energiespeichermodulen zwischen den Energiespeicherzellen ein vorbestimmter Abstand eingehalten wird, welcher sich an der erwarteten thermischen Ausdehnung der Energiespeicherzellen orientiert. Gleichzeitig ist es aufgrund von Leistungsanforderungen beziehungsweise von einem stetig steigenden Bedarf an Energiespeicherkapazität einerseits und einem nur limitiert zur Verfügung stehenden Platzangebot andererseits beispielsweise in elektrisch betriebenen Fahrzeugen notwendig, so viele Zellen wie möglich auf engem Raum unterzubringen, um eine hohe Leistungsdichte zu erzielen. Ferner ist ein stetiges Ziel von Weiterentwicklungen im Bereich von Energiespeichermodulen, Materialaufwand und Gewicht zu reduzieren, um eine größere Kostenersparnis zu Energieeffizienz zu erreichen.

Nachteilig ist dabei, dass sowohl für die Herstellung der Energiespeichermodule, insbesondere für die Positionierung der Energiespeicherzellen, als auch zum räumlichen Trennen der Zellen voneinander, zusätzliche Elemente zur Separierung der Energiespeicherzellen voneinander notwendig sind, welche die Module unnötig aufwendig machen und zu erhöhten Herstellungskosten führen und sich gleichzeitig negativ auf die mögliche Packungsdichte der Energiespeicherzellen auswirken.

Der vorliegenden Erfindung liegt daher die Aufgabe zugrunde, die Nachteile des Standes der Technik zu überwinden, insbesondere ein Energiespeichermodul dahingehend zu verbessern, dass dieses bei einer besonders kompakten und materialsparenden Bauweise besonders leicht herstellbar ist und eine hohe Stabilität aufweist.

Diese Aufgabe wird durch ein Energiespeichermodul mit den Merkmalen des Anspruchs 1 gelöst. Die abhängigen Ansprüche betreffen jeweils vorteilhafte Ausführungsformen der Erfindung.

Erfindungsgemäß ist vorgesehen, dass das Energiespeichermodul ferner ein Gehäuse mit einer der ersten Seitenfläche zugeordneten Seitenwand aufweist, an welcher die Verbindungselemente so befestigt sind, dass diese an den ihnen zugeordneten Anschlusslaschen befestigbar sind. Durch seinen rechteckigen Außenumfang kann sich der Energiespeicher in einer Längsabmessung entlang der Seitenflächen und in einer Querabmessung entlang der Stirnflächen erstrecken. Die Breite einer Energiespeichereinheit kann insbesondere dem doppelten Durchmesser einer Energiespeicherzelle zuzüglich des vorgesehenen Dehnabstands entsprechen. Die Längsabmessung kann daher insbesondere der Breite einer Energiespeichereinheit multipliziert mit der Anzahl an Energiespeichereinheiten plus der Anzahl an zwischen den Energiespeichereinheiten vorgesehenen Dehnabständen entsprechen. Die vorgesehenen Dehnabstände können dabei der maximalen erwarteten radialen Ausdehnung zweier benachbarter Zellen entsprechen, wobei die erwartete radiale Ausdehnung von der erwarteten maximalen Betriebstemperatur abhängen kann. Die maximale erwartete Betriebstemperatur kann von der Einsatzart oder auch dem Einsatzort abhängen. Die Achsen benachbarter Energiespeicherzellen können so angeordnet sein, dass zwischen diesen jeweils ein gleichseitiges Dreieck gebildet ist. Durch diese Anordnung kann die geringstmögliche Energiespeicherzellendichte erreicht werden. Die Energiespeichereinheit kann in ihrer Querabmessung unter anderem aufgrund der Anordnung in gleichseitigen Dreiecken eine Mehrzahl zickzackförmig zueinander versetzte Energiespeicherzellenpaare aufweisen. Dadurch kann der Abstand zweier Energiespeicherzellenpaare der Summe aus dem Energiespeicherzellendurchmesser plus dem vorgesehenen Dehnabstand multipliziert mit dem Faktor √3/2 sein. Dementsprechend kann die Querabmessung der Energiespeichereinheit der Anzahl an in Querrichtung nebeneinander angeordneter Energiespeicherzellenpaare subtrahiert um den Wert 1 multipliziert mit dem oben genannten Abstand zweier Energiespeicherzellenpaare sein. Die Energiespeicherzellenkönnen dabei zylindrisch sein, und einen nichtleitenden Zylindermantel aufweisen. Die Achsen der zylindrischen Zellen können insbesondere parallel zueinander ausgerichtet sein. Die Energiespeicherzellen können beispielsweise Batteriezellen oder Kondensatorzellen sein. Eine Beabstandung der Zellen einer Energiespeichereinheit zueinander auf den vorgesehenen Dehnabstand kann insbesondere durch die einerseits die Plus- und andererseits die Minuspole verbindenden Zellverbinder erfolgen. Die Zellverbinder verbinden die Zellen einer Energiespeichereinheit damit in einer Parallelschaltung. Die Zellverbinder können dabei beispielsweise auf die Zellen aufgeschweißt sein. Auf zusätzliche Abstandshalter zwischen den Zellen kann dadurch verzichtet werden. Die Verbindungselemente dienen einerseits dem Zweck, die Energiespeichereinheiten untereinander zu kontaktieren und andererseits dem Zweck, unmittelbar benachbarte Zellen aneinander angrenzender Energiespeichereinheiten auf dem vorgesehenen Dehnabstand zu halten. Durch das Anordnen der Verbindungselemente auf den Seitenflächen der Energiespeichereinheit beziehungsweise auf den nichtleitenden Flächen der Energiespeicherzellen wird einerseits das Verbinden der Energiespeichereinheiten untereinander vereinfacht und andererseits die Verwindungssteifigkeit des Energiespeichers erhöht. Gegenüber der Verbindungsart von Energiespeichereinheiten, bei der die Verbindungselemente jeweils alternierend an Ober- und Unterseite zwischen den Energiespeichereinheiten vorgesehen sind, sodass an den jeweils nicht verbundenen Ober- oder Unterseiten die notwendige Beanstandung nicht sicher gewährleistet werden kann, hat die erfindungsgemäße Verbindungsart den Vorteil, dass die seitliche Verbindung eine erhöhte Stabilität des Energiespeichers erzielt. Die Verbindungselemente verbinden die Energiespeichereinheiten untereinander in Reihe. Es kann vorgesehen sein, dass die Anschlusslaschen einstückig mit den Zellverbindern verbunden sind und an den Seiten der Energiespeichereinheiten jeweils auf die Außenflächen der Energiespeicherzellen umgebogen sind. Die Anschlusslaschen können dabei wahlweise mittig zwischen den beiden Energiespeicherzellen der Energiespeichereinheit oder lediglich auf eine der Energiespeicherzellen umgebogen sein. Dadurch können die Anschlusslaschen an Ober-und Unterseite auf der Seitenfläche der Energiespeichereinheit aufeinander zuweisen und insbesondere voneinander beabstandet sein. Die Anschlusslaschen können insbesondere Blechabschnitte sein und eine rechteckige oder halbrunde Form aufweisen. Das Verbindungselement kann beispielsweise ein Verbindungsblech oder ein Draht sein. Das Verbindungsblech kann beispielsweise jeweils mit seinen Endabschnitten an den zugeordneten Anschlusslaschen befestigt sein.

Dadurch, dass das Energiespeichermodul ein Gehäuse mit einer der ersten Seitenfläche zugeordneten Seitenwand aufweist, an welcher die Verbindungselemente so befestigt sind, dass diese an den ihnen zugeordneten Anschlusslaschen befestigbar sind, kann die Ausrichtung der Verbindungselemente auf die zugehörigen Anschlusslaschen somit durch die Seitenwandgeometrie vorbestimmt werden. Es kann vorgesehen sein, dass eine Kontaktierung der Anschlusslaschen mit den Verbindungselementen durch Befestigen der Seitenwand am Energiespeichermodul erzielt wird. Dazu können die Verbindungselemente beispielsweise über Vorspannelemente gegenüber der Seitenwand vorgespannt sein.

Ferner kann die Seitenwand jeweils den Anschlusslaschen zugeordnete und mit diesen fluchtende Fixierfenster aufweisen, über welche die Verbindungselemente mit den Anschlusslaschen von der Gehäuseaußenseite her fixierbar sind. Die Fixierfenster können Durchbrüche sein, welche in die Seitenwand eingebracht sind. Die Fixierfenster können der Geometrie der Anschlusslaschen entsprechen. Mittels der Fixierfenster können die Verbindungselemente nach der Montage der Seitenwand mit den Anschlusslaschen verschweißt werden. Durch die vorausgerichteten Verbindungselemente ist damit kein separates Justieren der Verbindungselemente auf den Anschlusslaschen notwendig, so dass das Energiespeichermodul schnell und kostengünstig herstellbar ist.

Außerdem kann die Seitenwand je Fixierfenster zumindest ein, insbesondere zwei, an das Fixierfenster angrenzendes Rastelement zum Fixieren des dem Fixierfenster zugeordneten Verbindungselements aufweisen. Die Rastelemente können dabei insbesondere auf der dem Energiespeicher zugewandten Seite der Seitenwand vorgesehen sein. Die Rastelemente können insbesondere eine Anlagefläche und einen Rastvorsprung aufweisen. Je Anlagefläche kann dabei das Eingrenzen eines Freiheitsgrads des Verbindungselements vorgesehen sein. Beispielsweise kann das Verbindungselement eine rechteckige Form aufweisen und an jeder der Außenseiten des Verbindungselements ein Rastelement mit einer der jeweiligen Außenseite zugeordneten Anlagefläche vorgesehen sein. Dadurch kann das Verbindungselement an der Seitenwand verankert werden. Je Fixierfenster können insbesondere zwei Rastelemente mit senkrecht zueinander und aufeinander zuweisend ausgerichteten Anlageflächen vorgesehen sein. Dasjenige benachbarte Fixierfenster, an welchem das jenseitige Ende des Verbindungselements fixiert werden soll, weist entsprechend ebenfalls zwei Rastelemente mit senkrecht zueinander und aufeinander zuweisend beziehungsweise auf die Anlageflächen des zugeordneten benachbarten Fixierfensters ausgerichteten Anlageflächen auf. Die Rastvorsprünge grenzen an die Anlageflächen an, so dass die Anlageflächen hinterschnittig hinter den Rastvorsprüngen liegen. So können die Verbindungselemente zur Montage auf die zugeordnete Position ausgerichtet und in die Rastelemente eingeklickt werden. Anschließend kann die Seitenwand mitsamt den montierten Verbindungselementen am Energiespeichermodul fixiert und die Verbindungselemente mit den zugeordneten Anschlusslaschen verschweißt werden. Die Anlageflächen können eine Breite aufweisen, welche eine Aufnahme von Verbindungselementen mit einer Dicke von beispielsweise 0,8 mm ermöglicht.

Darüber hinaus kann die Seitenwand ferner eine Mehrzahl, insbesondere eine der Anzahl der Energiespeicherzellen entsprechende Anzahl, Federelemente zum Erzeugen einer Vorspannung zwischen der Seitenwand und dem Energiespeicher im montierten Zustand der Seitenwand aufweisen. Dazu können beispielsweise Klemmstege an die Seitenwand angeformt sein, welche sich mit ihrem gegenüberliegenden Ende angewinkelt von der Seitenwand wegerstrecken. Die Klemmstege können beispielsweise einen Federweg von 2 mm aufweisen. Die Federelemente können sowohl nahe der Oberkante als auch nahe der Unterkante der Seitenwand angeordnet sein. Die Klemmstege an der Oberkante können sich in Richtung der Oberkante und die Klemmstege an der Unterkante in Richtung der Unterkante erstrecken.

Ferner kann das Gehäuse einen Boden und/oder einen Deckel umfassen, wobei die Seitenwand an ihrer Ober- und/oder Unterkante eine sich in Längsrichtung erstreckende Eckaussparung zum vertikalen Abstützen und seitlichen Fixieren des Bodens und/ oder des Deckels aufweisen kann. Der Deckel und der Boden können so dimensioniert sein, dass sie zumindest die Längsabmessung und die Querabmessung des Energiespeichers aufweisen und darüber hinaus auf der Eckaussparung der Seitenwand aufliegen können.

Außerdem kann die Seitenwand ferner eine Mehrzahl zur Ober- und oder zur Unterkante weisende Befestigungselementaufnahmen aufweisen, über welche der Boden und/oder der Deckel auf den zugeordneten Eckaussparungen fixierbar sind. Die Befestigungselementaufnahmen können jeweils Auflageflächen aufweisen, welche auf der Ebene der Eckaussparungen liegen. Die Befestigungselementaufnahmen können an die Seitenwand angeformt sein. Die Befestigungselementaufnahmen können Bohrungen aufweisende Verschraubungspunkte sein. Die Verschraubungspunkte können Senkbohrungen aufweisen. Zwischen den Befestigungselementaufnahmen an der Oberkante und den Befestigungselementaufnahmen an der Unterkante sowie zwischen den oberen und unteren Fixierfenstern kann ein in Längsrichtung verlaufender Freiraum vorgesehen sein. Im Bereich des Freiraums kann eine in Längsrichtung verlaufende Nut in der Seitenwand vorgesehen sein. Die Nut kann beispielsweise ein Kabelkanal sein. Die Seitenwand kann im Bereich der Nut zumindest einen Durchbruch zur Kabeldurchführung aufweisen. Beispielsweise kann jeweils zwischen oberem und unterem Verschraubungspunkt ein Durchbruch vorgesehen sein.

Ferner kann die Seitenwand auf ihrer dem Energiespeicher abgewandten Seite ein sich im Wesentlichen in Längsrichtung der Seitenwand erstreckendes Versteifungsteil aufweisen, das eine Mehrzahl mit den Fixierfenstern fluchtende Durchbrüche aufweist. Das Versteifungsteil kann aus Metall bestehen. Die Seitenwand kann an ihrer Außenseite eine Längsnut aufweisen, in welcher das Versteifungsteil aufgenommen ist. Das Versteifungsteil kann ferner eine Mehrzahl mit den Durchbrüchen zur Kabeldurchführung fluchtende Öffnungen aufweisen. Das Versteifungsteil kann ferner in Längsrichtung seitlich über die Seitenwand hinausragende Befestigungslaschen zum Verbinden der Seitenwand mit den angrenzenden Gehäusewänden aufweisen.

Außerdem kann das Gehäuse an zumindest einer der Stirnflächen des rechteckigen Außenumfangs des Energiespeichers ein die angrenzende Energiespeichereinheit abdeckendes Kopfteil umfassen, welches eine Mehrzahl zur Ober- und oder zur Unterkante des Kopfteils weisende Befestigungselementaufnahmen aufweist, über welche der Boden und/oder der Deckel am Kopfteilbar fixierbar sind. Die Befestigungselementaufnahmen können dabei den Befestigungselementaufnahmen der Seitenwand entsprechen. Das Kopfteil kann ferner eine Mehrzahl Federelemente zum Erzeugen einer Vorspannung zwischen dem Kopfteil und dem Energiespeicher im montierten Zustand des Kopfteils aufweisen. Die Federelemente können dabei entsprechend zur Seitenwand ausgebildet sein.

Ferner kann das Kopfteil über zumindest ein elektrisch leitendes Anschlusselement mit der freien Anschlusslasche der angrenzenden Energiespeichereinheit verbunden sein. Das elektrisch leitende Anschlusselement kann einen ersten Abschnitt aufweisen, der sich im Wesentlichen senkrecht von Kopfteil wegerstreckt. Das Anschlusselement kann ferner einen zweiten Abschnitt aufweisen, der parallel zum Kopfteil angeordnet ist und über welchen das Anschlusselement am Kopfteil befestigt ist. Das Anschlusselement kann beispielsweise ein elektrisch leitendes Blech sein. Der zweite Abschnitt kann dabei vom ersten Abschnitt, insbesondere rechtwinklig, umgebogen sein.

Darüber hinaus kann der erste Zellverbinder mit einer dritten und der zweite Zellverbinder mit einer vierten Anschlusslasche elektrisch verbunden sein, welche auf einer einer zweiten, der ersten Seitenfläche gegenüberliegenden Seitenfläche des rechteckigen Außenumfangs zugewandten Außenseite der Energiespeichereinheit angeordnet sind, wobei jeweils die dritte Anschlusslasche der Energiespeichereinheiten über ein elektrisch leitendes Verbindungselement mit der vierten Anschlusslasche der jeweils in einer Längsrichtung der ersten Seitenfläche benachbarten Energiespeichereinheit verbunden ist. Durch das Anschließen von Verbindungselementen auf beiden Seiten des Energiespeichers wird die Stabilität des Energiespeichers erhöht und insbesondere eine sichere Beabstandung der Energiespeicherzellen zueinander gewährleistet.

Insbesondere kann das Gehäuse ferner eine der zweiten Seitenfläche zugeordnete Seitenwand aufweisen, welche dieselben Merkmale wie die gegenüberliegende erste Seitenwand aufweisen kann. Die Seitenwände können insbesondere Gleichteile sein.

Das Energiespeichermodul kann beispielsweise sieben, zehn oder dreizehn Energiespeichereinheiten, oder gegebenenfalls noch mehr, umfassen, welche in Längsrichtung der Seitenwand nebeneinander angeordnet sind. Darüber hinaus ist das Energiespeichermodul sowohl auf jede gewünschte Stromstärke durch Variierung der Energiespeicherzellen je Energiespeichereinheit als auch auf jede Spannung durch Variierung der Anzahl Energiespeichereinheiten erweiterbar.

Es kann vorgesehen sein, dass die zumindest zwei Energiespeicherzellen der Energiespeichereinheiten in Längsrichtung der Seitenwand benachbart sind, wobei die Energiespeichereinheit ferner eine Mehrzahl weiterer Paare aus jeweils in Längsrichtung der Seitenwand benachbarten Energiespeicherzellen aufweist, wobei sich die Mehrzahl Energiespeicherzellenpaare in einer Richtung quer zur Seitenwand erstreckt.

Außerdem kann vorgesehen sein, dass jeweils alle Plus- und alle Minuspole der Energiespeicherzellen zur Oberseite oder zur Unterseite des Energiespeichers ausgerichtet sind, sodass die Verbindungselemente benachbarte Energiespeichereinheiten jeweils diagonal verbinden. Durch diagonales Verbinden kann eine besonders hohe Stabilität des Moduls erreicht werden, da so ein Verkippen der Energiespeichereinheiten relativ zueinander am effektivsten unterbunden werden kann.

Beispielhafte Ausführungsformen der Erfindung werden anhand der nachfolgenden Figuren erläutert. Dabei zeigt:
- Fig. 1: eine Explosionsansicht einer Ausführungsform des Energiespeichermoduls;
- Fig. 2: eine perspektivische Ansicht einer Ausführungsform des Energiespeichermoduls im montierten Zustand;
- Fig. 3: eine Draufsicht auf eine Ausführungsform des Energiespeichermoduls im montierten Zustand;
- Fig. 4: eine perspektivische Ansicht einer Ausführungsform der Seitenwand des Energiespeichermoduls;
- Fig. 5a/b: zwei perspektivische Ansichten einer Ausführungsform des frontseitigen Kopfteils in Vorder- und Rückansicht;
- Fig. 6a/b: zwei perspektivische Ansichten einer Ausführungsform des rückseitigen Kopfteils in Vorder- und Rückansicht.

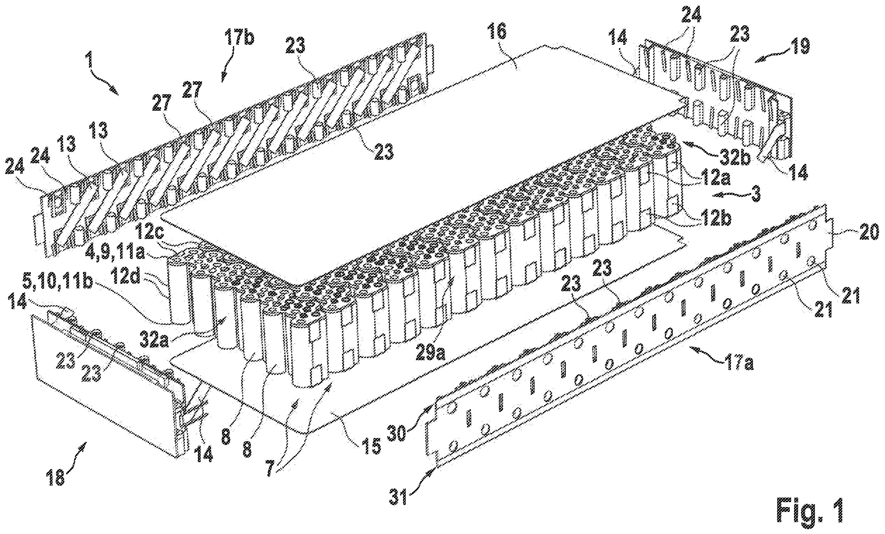

Das in Figur 1 dargestellte Energiespeichermodul 1 weist einen Energiespeicher 3 bestehend aus 13 in Längsrichtung nebeneinander angeordneten Energiespeichereinheiten 7 auf, welche jeweils elf in Querrichtung nebeneinander angeordnete Energiespeicherzellenpaare aufweisen, also jeweils zweiundzwanzig Energiespeicherzellen 8 aufweisen. Die Energiespeicherzellen 8 sind dabei jeweils zylindrisch und mit ihren Achsen jeweils parallel zueinander ausgerichtet. Die Energiespeicherzellenpaare sind dabei zickzackförmig nebeneinander angeordnet, so dass die Abstände zwischen allen Energiespeicherzellen 8 so bemessen sind, dass deren Achsen gleichseitige Dreiecke zueinander bilden. Dabei ist zwischen allen Energiespeicherzellen 8 ein vorbestimmter Dehnabstand vorgesehen, welcher ein Ausdehnen der Energiespeicherzellen 8 im Betrieb des Energiespeichermoduls 1 kompensiert.

Auf der Oberseite 4 des Energiespeichers 3 ist auf jeder Energiespeichereinheit 7 jeweils ein erster Zellverbinder 11a angeordnet, welcher die nach oben weisenden Pluspole 9 der Energiespeicherzellen 8 elektrisch miteinander verbindet und die Energiespeicherzellen 8 gleichzeitig auf ihrem vorbestimmten den Abstand zueinander hält. In gleicher Weise ist an der Unterseite 5 des Energiespeichers 3 auf jeder Energiespeichereinheit 7 ein zweiter Zellverbinder 11b angeordnet, welche jeweils die Minuspole aller Energiespeicherzellen 8 der jeweiligen Energiespeichereinheiten 7 miteinander verbindet und auch an der Unterseite die Energiespeicherzellen 8 auf ihrem vorbestimmten den Abstand zueinander hält.

Die Energiespeichereinheiten 7 sind so zueinander angeordnet, dass der Energiespeicher 3 in Längsrichtung des Energiespeichermoduls 1 verlaufende Seitenflächen 29a, 29b aufweist. Die Zellverbinder 11a und 11b weisen jeweils Anschlusslaschen 12a, 12b, 12c, 12d auf, welche jeweils auf die Seitenfläche 29a bzw. Seitenfläche 29b umgebogen sind, sodass die Anschlusslaschen 12a und 12b jeder Energiespeichereinheit 7 jeweils auf der Seitenfläche 29a und die Anschlusslaschen 12c und 12d jeder Energiespeichereinheit 7 jeweils auf der gegenüberliegenden Seitenfläche 29b aufeinander zuweisen.

Das Energiespeichermodul 1 weist ferner ein Gehäuse 2 auf, welches Seitenwände 17a und 17b, ein frontseitiges Kopfteil 18, ein rückseitiges Kopfteil 19 sowie einen Boden 15 und einen Deckel 16 aufweist. Während der Deckel 16 die Oberseite 4 des Energiespeichers 1 und der Boden 15 die Unterseite 5 des Energiespeichers 1 verdeckt, sind die Seitenwände 17a und 17b entlang der Seitenflächen 29a, 29b des Energiespeichers 3 angeordnet und die Kopfteile 18 und 19 jeweils stirnseitig an den Querseiten 32a, 32b des Energiespeichermoduls 1 angeordnet. Die Seitenwände 17a und 17b weisen dabei jeweils Rastelemente 25 auf, über welche elektrische Verbindungselemente 13 jeweils diagonal und auf den Energiespeicher 3 zuweisend an den Seitenwänden 17a, 17b befestigt sind. Dadurch sind die Verbindungselemente 13 bereits durch das Aufsetzen der Seitenwände auf die Seitenflächen so ausgerichtet, dass diese mit den entsprechenden Anschlusslaschen zwölf A bis zwölf die verbunden sind oder verbunden werden können. Es ist zu erkennen, dass je Anschlusslasche 12a-12d jeweils ein zwei Rastelemente 25 vorgesehen sind, in welchen jeweils ein Endabschnitt eines Verbindungselements 13 gehalten ist. Es ist zu erkennen, dass von links nach rechts des Energiespeichermoduls 1 die Verbindungselemente 13 jeweils eine untere Anschlusslasche 12b bzw. 12d einer ersten Energiespeichereinheit 7 jeweils mit einer oberen Anschlusslasche 12a bzw. 12c einer rechts neben der ersten Energiespeichereinheit 7 angeordneten zweiten Energiespeichereinheit 7 verbunden sind. Die frei bleibenden Anschlusslaschen sind dabei jeweils über an den Kopfteilen befestigte Anschlusselemente 14 angeschlossen. In Figur 1 betrifft dies die Anschlusslaschen 12a und 12c der an das frontseitige Kopfteil 18 angrenzenden Energiespeichereinheit 7 und die Anschlusslaschen 12b und 12d der an das rückseitige Kopfteil 19 angrenzenden Energiespeichereinheit 7. Die Verbindungselemente 13 können beispielsweise über Federelemente vorgespannt sein, so dass bereits durch Aufsetzen der Seitenwände auf das Energiespeichermodul 1 eine elektrische Verbindung zwischen den Anschlusslaschen 12a-12d und den jeweiligen Verbindungselementen 13 hergestellt ist. Die Seitenteile 17a und 17b weisen ferner Versteifungsteile 20 auf, welche jeweils in einer in Längsrichtung der Seitenwände 17a, 17b verlaufenden Aussparungen 26 aufgenommen sind und die Biegesteifigkeit der Seitenwände 17a, 17b erhöhen. Die Seitenwände 17a und 17b weisen ferner Fixierfenster 27 auf, welche jeweils mit den Anschlusslaschen 12a bis 12d bzw. den Endabschnitten der an den Seitenwänden befestigten Verbindungselemente 13 fluchten. Die auf die Seitenwände 17a, 17b aufgesetzten Versteifungsteile 20 weisen entsprechende Durchbrüche 21 auf, welche ebenfalls mit den Fixierfenstern 27 fluchten, sodass von der Gehäuseaußenseite her im montierten Zustand der Seitenwände 17a, 17b beispielsweise durch Schweißen eine Verbindung der Verbindungselemente 13 mit den jeweiligen Anschlusslaschen 12a-12d hergestellt werden kann.

Der Boden 15 und der Deckel 16 werden mit den Gehäuseaußenelementen verbunden. Hierzu weisen die Seitenwände 17a, 17b und die Kopfteile 18, 19 jeweils eine Mehrzahl regelmäßig beabstandeter Befestigungselementaufnahmen 23 auf, welche jeweils entlang der Oberkante 30 und der Unterkante 31 der Gehäuseaußenelementen angeordnet sind und in Richtung Deckel 16 oder Boden 15 weisen. Wie in Figur 1 dargestellt sind die Befestigungselementaufnahmen 23 als Verschraubungspunkte für Senkschrauben ausgebildet, so dass Deckel 16 und Boden 15 mit den Gehäuseaußenelementen verschraubt werden können. Ferner sind an den Gehäuseaußenelementen eine Mehrzahl Federelemente 24 angeordnet, welche wie dargestellt als Klemmstege ausgebildet sein können. Diese sind dabei in regelmäßigen Abständen zweireihig an den Gehäuseelementen angeformt und erstrecken sich in spitzem Winkel von den Gehäuseelementen in Richtung Energiespeicher 3. Die Klemmstege können dabei beispielsweise einen Federweg von 2 mm aufweisen. Die Federelemente 24 dienen dem Zweck, eine Vorspannung zwischen jeweiliger Gehäusewand und dem Energiespeicher herzustellen, um eine mittige Positionierung des Energiespeichers 3 im Gehäuse 2 zu erzielen und um den Energiespeicher 3 gegen Stöße zu schützen.

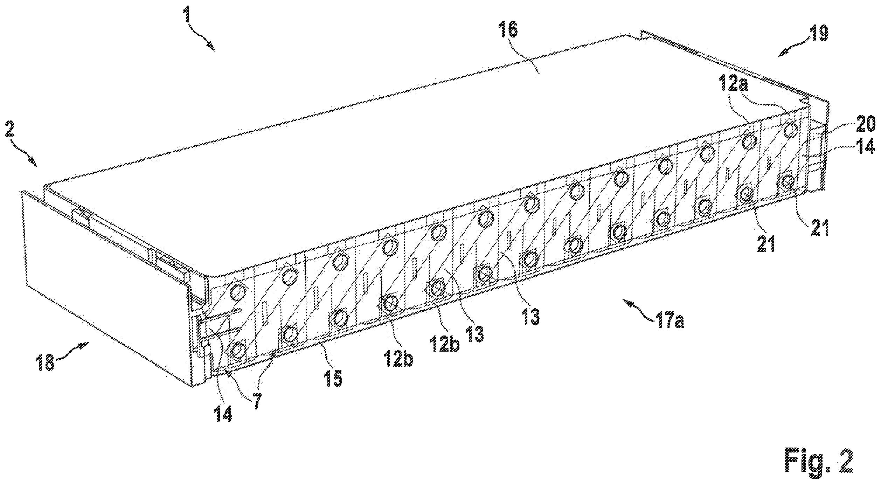

Figur 2 zeigt das Energiespeichermodul 1 im montierten Zustand, d. h. den Energiespeicher 3, welche im Gehäuse 2 aufgenommen ist, wobei die Seitenwände 17a und 17b jeweils mit dem frontseitigen Kopfteil 18 und dem rückseitigen Kopfteil 19 verbunden sind und der Deckel 16 und der Boden 15 jeweils mit der Gehäuseaußenschale verschraubt sind. Insbesondere ist dargestellt, wie die Anschlusslaschen 12a-12d mit den Verbindungselementen 13 verbunden sind. Die Anschlusslasche 12a der an das frontseitige Kopfteil 18 angrenzenden Energiespeichereinheit 7 ist dabei elektrisch mit dem am frontseitigen Kopfteil 18 befestigten Anschlusselement 14 verbunden. Die Anschlusslasche 12b der an das rückseitige Kopfteil 19 angrenzenden Energiespeichereinheit 7 ist elektrisch mit dem am rückseitigen Kopfteil 19 befestigten Anschlusselement 14 verbunden. Die Anschlusselemente 14 sind dabei jeweils mittig mit den Kopfelementen 18, 19 verbunden und jeweils parallel zu den weiteren Verbindungselementen 13 abgewinkelt. Die Verbindungselemente 13 verbinden jeweils benachbarte Energiespeichereinheiten 7 so miteinander, dass das Verbindungselement 13 von der unteren Anschlusslasche 12b einer linken Energiespeichereinheit 7 zu der oberen Anschlusslasche 12a einer rechts daneben angeordneten rechten Energiespeichereinheit 7 verläuft. Es ist zu erkennen, dass die Verbindungspunkte zwischen den Verbindungselementen 13 und den jeweiligen Anschlusslaschen 12a-12d jeweils von der Außenseite des Gehäuses durch die Durchbrüche 21 im Versteifungsteil 20 sowie die Fixierfenster 27 in den Seitenwänden 17 A, 17b erreichbar sind. Dadurch können nach Aufsetzen der Seitenwände die Anschlusslaschen mit den jeweiligen Enden der Verbindungselemente 13 verschweißt werden. Die gegenüberliegende, nicht dargestellte Seite des Energiespeichermoduls 1 ist symmetrisch zur dargestellten Seite ausgebildet, so dass dort die Verbindungselemente 13 jeweils benachbarte Energiespeichereinheiten 7 so miteinander verbinden, dass das Verbindungselement 13 von der unteren Anschlusslasche 12d einer linken Energiespeichereinheit 7 zu der oberen Anschlusslasche 12c einer rechts daneben angeordneten rechten Energiespeichereinheit 7 verläuft.

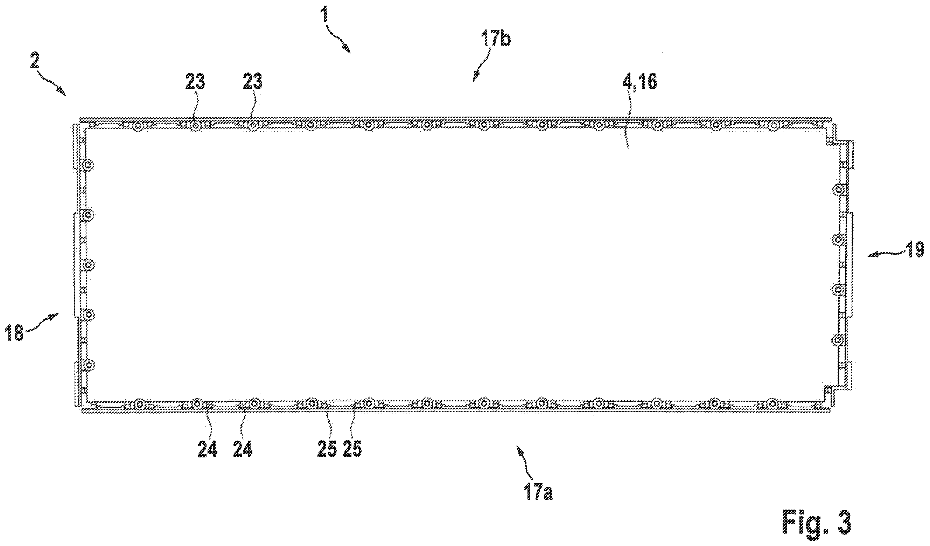

Die in Figur 3 dargestellte Draufsicht auf ein Energiespeichermodul 1 zeigt insbesondere die Anbindung der Seitenelemente 17a, 17b an den Deckel 16 auf der Oberseite 4 des Energiespeichers 3. Die Anbindung der Gehäuseaußenelemente an den Boden 15 erfolgt in gleicher Weise. Die Seitenwände 17 A und 17 B sowie die Kopfteile 18 und 19 weisen dazu in regelmäßigen Abständen Verschraubungspunkte 23 auf, über welche der Deckel 16 an den jeweiligen Elementen angeschraubt ist. Ferner sind die Federelemente 24 zu erkennen, welche im montierten Zustand des Energiespeichermoduls 1 eine Vorspannung zwischen dem im Gehäuse 2 aufgenommen Energiespeicher 3 und den Seitenwänden 17a, 17b erzeugen. Die Seitenwände 17a und 17b weisen dabei jeweils zwei Federelemente 24 zwischen zwei Verschraubungspunkten 23 auf, wobei die Federelemente 24 jeweils rechts und links der Fixierfenster 27 angeordnet sind. Die Kopfteile 18 und 19 weisen jeweils ein Federelement 24 zwischen den Verschraubungspunkten 23 auf.

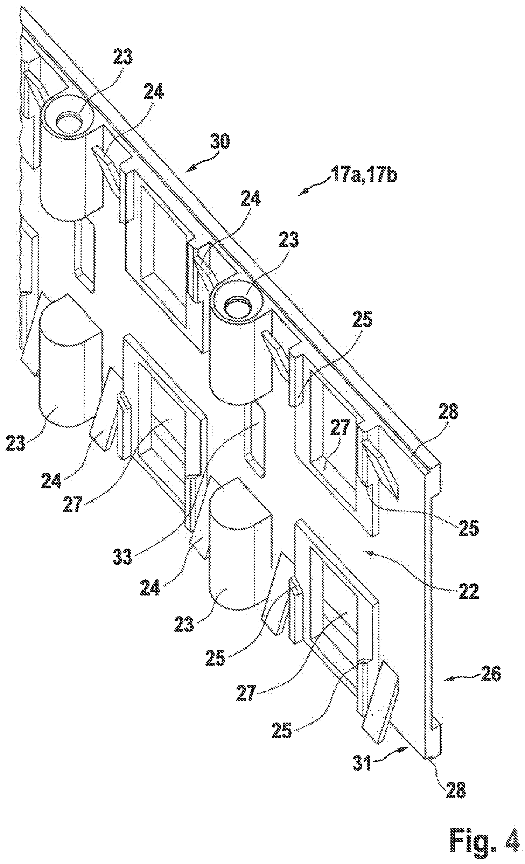

Figur 4 stellt einen Detailausschnitt der Seitenwände 17a, 17b dar. Die Seitenwände 17a, 17b sowie die Kopfteile 18, 19 sind jeweils im Spritzgussverfahren hergestellte Kunststoffteile. An die Seitenwände 17a1, 17b sind dabei jeweils die Federelemente 24, die Befestigungselementaufnahmen 23 sowie die Rastelemente 25 angeformt. Die Fixierfenster 27 sind jeweils als rechteckige Durchbrüche ausgebildet. Die Kabeldurchführungen 33 sind ebenfalls als rechteckige Durchbrüche ausgebildet. Es ist zu erkennen, dass mittig in Längsrichtung der Seitenwand ein Freiraum zwischen jeweils den Fixierfenster 27 sowie den Befestigungselementaufnahmen 23 gebildet ist, welcher beispielsweise als Kabelkanal 22 nutzbar ist, wobei die Durchbrüche 33 jeweils zur Kabeldurchführung dienen können. Der Freiraum dient ferner dazu, die Verbindungselemente 13 diagonal zwischen den Befestigungselementaufnahmen 23 hindurchführen zu können. Die Federelemente 24 sind an der Unterkante 31 als im spitzen Winkel angeformte und nach unten weisende Klemmstege ausgebildet, welche sich bis zu einem Abstand von 2 mm von der Seitenwand wegerstrecken. In symmetrischer Weise sind an der Oberkante 30 die Federelemente 24 nach oben weisend ausgebildet. Je Fixierfenster 27 sind links und rechts daneben zwei Rastelemente 25 vorgesehen, welche jeweils eine Auflagefläche und einen Rastvorsprung aufweisen, wobei die Auflageflächen beider einem Fixierfenster 27 zugeordneten Rastelemente 25 in einem rechten Winkel zueinander stehen und aufeinander zuweisen. Dadurch kann an einem der Rastelemente 25 die Querseite eines Verbindungselements 13 und an dem anderen Rastelement 25 die Längsseite eines Verbindungselements 13 gehalten werden. Die gegenüberliegende Querseite sowie die andere Längsseite desselben Verbindungselements 13 werden dabei durch die Rastelemente 25 des diagonal beabstandeten Fixierfensters 27 gehalten. Die Verbindungselemente 13 können über die Rastvorsprünge hinweg in die gewünschte Position eingeklickt werden. Entlang der Oberkante 30 und entlang der Unterkante 31 weist die Seitenwand 17a, 17b jeweils eine Eckaussparung 28 auf, welche als Auflagefläche sowie als seitliche Begrenzung für Deckel 16 und Boden 15 dient. Auf ihrer dem Energiespeicher 3 abgewandten Seite weist die Seitenwand 17a, 17b eine Aussparung 26 auf, in welcher das Versteifungsteil 20 aufgenommen werden kann.

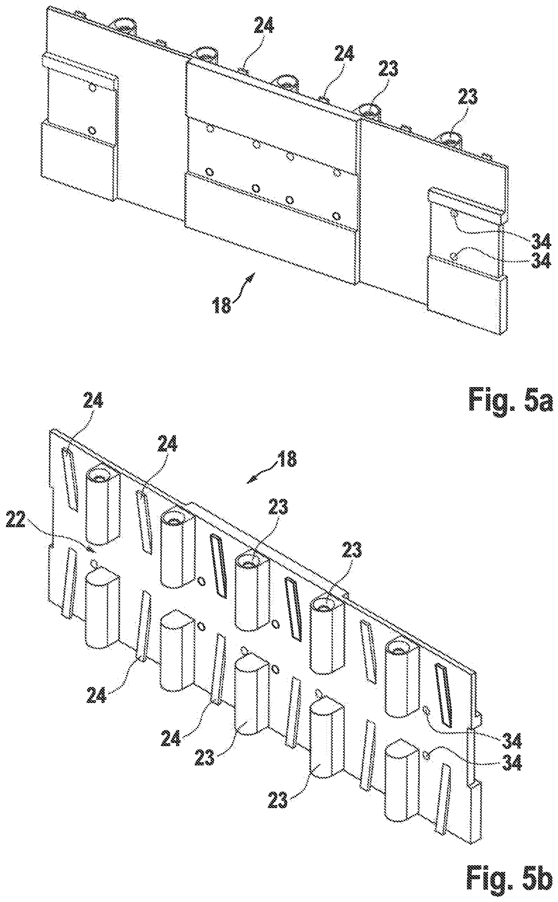

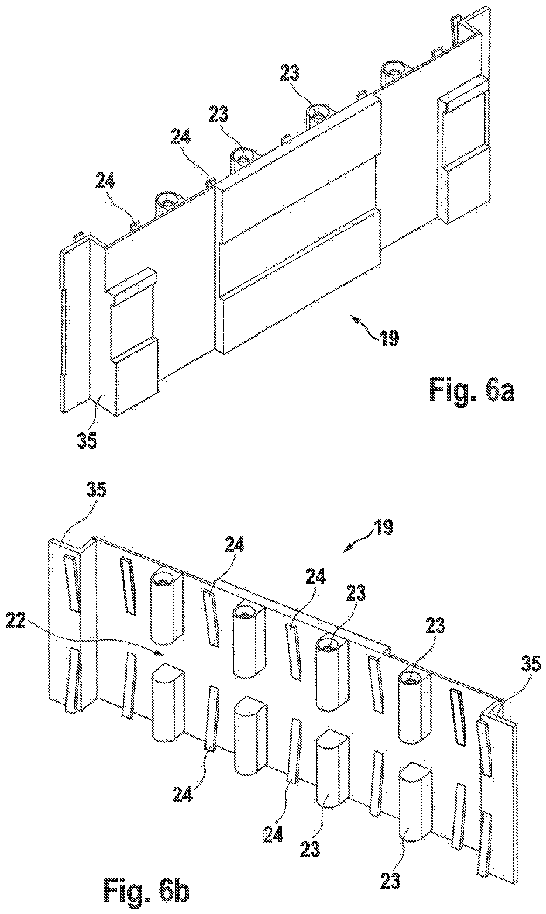

Figur 5 und Figur 6 zeigen die ebenfalls im Spritzgussverfahren hergestellten Kopfteile des Gehäuses 2, welche aufgrund der Geometrie der Energiespeichereinheiten 7 nicht als Gleichteile ausgebildet sind. Die Energiespeicherzellen 8 der Energiespeichereinheiten 7 sind entlang der Seitenwände 17a, 17b jeweils in einer geraden Linie aufgereiht. Demgegenüber weisen die Energiespeicherzellen 8 in Querrichtung des Energiespeichermoduls 1 einen zickzackförmigen Verlauf auf. Ferner weisen durch die elf benachbarten Energiespeicherzellenpaare in Richtung des frontseitigen Kopfteils 18 sechs Energiespeicherzellen 8 und in Richtung des rückseitigen Kopfteils 19 lediglich fünf. Aus diesem Grund weist das rückseitige Kopfteil 19 daher außenseitig zwei Umkantungen 35 auf, durch welche jeweils die äußeren Energiespeicherzellen 8 der an das rückseitige Kopfteil 19 anliegenden Energiespeichereinheit 7 durch die Federelemente 24 des Kopfteils abgestützt werden können. Die Kopfteile 18, 19 weisen ebenfalls jeweils Befestigungselementaufnahmen 23 in Form von Verschraubungspunkten auf, wobei diese aufgrund der oben beschriebenen Geometrie der Energiespeichereinheiten 7 in Querrichtung weiter auskragen als die Befestigungselementaufnahmen 23 der Seitenwände. Auch die Federelemente 24 der Kopfteile 18, 19 kragen weiter aus als die der Seitenwände 17a, 17b und sind zu diesem Zweck einerseits weiter mittig auf den Kopfteilen angeformt und weisen andererseits eine größere Länge als die Federelemente 24 der Seitenwände auf. Das frontseitige Kopfteil weist ferner eine Mehrzahl Bohrungen 34 zum Befestigen von Anschlusselementen auf.

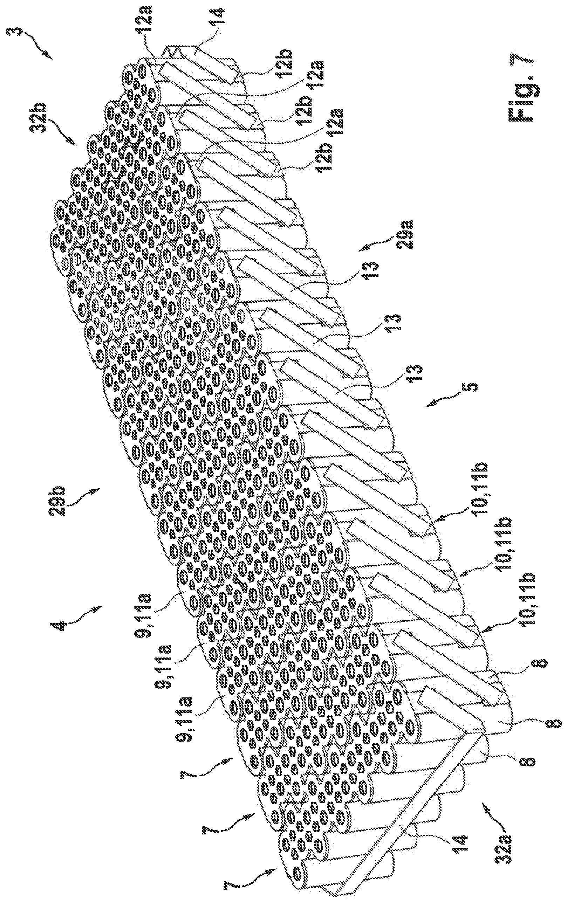

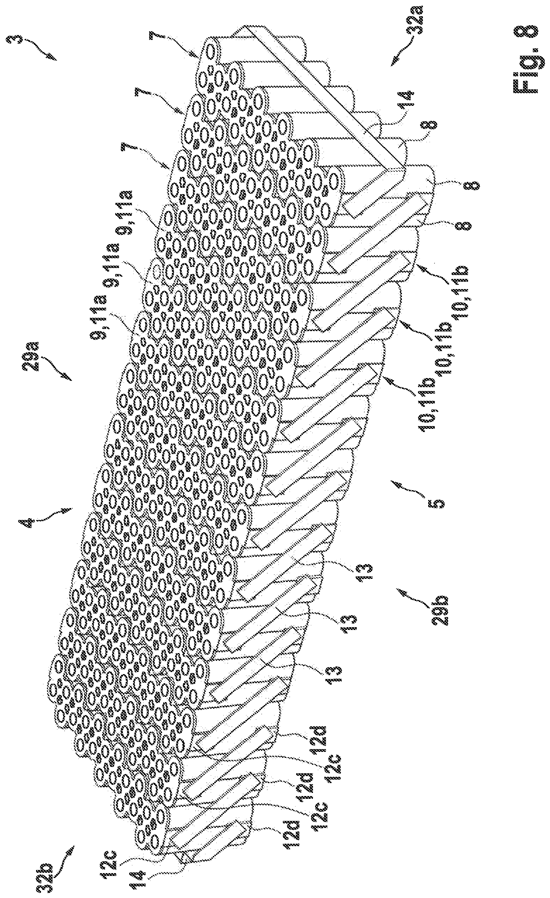

In den Figuren 7 und 8 ist eine Ausführungsform des Energiespeichers 3 dargestellt, welche die Besonderheit aufweist, dass zunächst alle in den Figuren 7 und 8 dargestellten Elemente des Energiespeichers 3 miteinander verbunden und fixiert werden und erst im Anschluss die Gehäusekomponenten montiert werden.

Die dargestellte Ausführungsform weist dreizehn nebeneinander angeordnete Energiespeichereinheiten 7 auf. Die Energiespeichereinheiten 7 weisen jeweils elf in Querrichtung des Energiespeichers 3 benachbarte und zickzackförmig versetzt zueinander angeordnete Energiespeicherzellenpaare auf. Die Energiespeicherzellenpaare sind jeweils aus zwei Energiespeicherzellen 8 gebildet, welche in Längsrichtung des Energiespeichers 3 zueinander benachbart sind. Alle Pluspole 9 der Energiespeicherzellen 8 der Energiespeichereinheiten 7 sind der Oberseite 4 des Energiespeichers 3 zugewandt und über einen, insbesondere einteiligen, ersten Zellverbinder 11a mechanisch und elektrisch miteinander verbunden. Entsprechend sind alle Minuspole 10 der Energiespeicherzellen 8 der Energiespeichereinheiten 7 der Unterseite 5 des Energiespeichers 3 zugewandt und über einen, insbesondere einteiligen, zweiten Zellverbinder 11b mechanisch und elektrisch miteinander verbunden. Die Zellverbinder sind jeweils mit den Energiespeichereinheiten verschweißt oder verlötet. Über den ersten und zweiten Zellverbinder 11a, 11b sind die Energiespeicherzellen 8 so zueinander fixiert, dass zwischen allen unmittelbar benachbarten Energiespeicherzellen 8 derselbe vorbestimmte Abstand vorhanden ist. Die Zellverbinder 11a, 11b weisen an ihren gegenüberliegenden Querseiten jeweils Anschlusslaschen 12a, 12c beziehungsweise 12b, 12d auf, welche jeweils auf die ersten und zweiten Seitenflächen 29a, 29b des Energiespeichers 3 umgekantet sind. Dabei sind diagonal benachbarte Anschlusslaschen über Verbindungselemente 13 miteinander verbunden. Beispielsweise ist, wie Figur 7 zeigt, die Anschlusslasche 12b der kopfseitigen Energiespeichereinheit 7 über ein Verbindungselement 13 mit der diagonal dazu gelegenen Anschlusslasche 12a der benachbarten Energiespeichereinheit 7 verbunden. Entsprechend sind alle Verbindungselemente 13 auf der ersten Seitenfläche 29a parallel zueinander angeordnet. Gleichzeitig ist, wie in Figur dargestellt ist, die Anschlusslasche 12d der kopfseitigen Energiespeichereinheit 7 über ein Verbindungselement 13 mit der diagonal dazu gelegenen Anschlusslasche 12c der benachbarten Energiespeichereinheit 7 verbunden. Entsprechend sind auch alle Verbindungselemente 13 auf der zweiten Seitenfläche 29b parallel zueinander angeordnet. Somit sind in Querrichtung des Energiespeichers 3 angeordnete Verbindungselemente 13 ebenfalls parallel zueinander angeordnet. Über die in Querrichtung gegenüberliegenden Verbindungselemente 13 sind benachbarte Energiespeichereinheiten 7 jeweils so zueinander fixiert, dass zwischen unmittelbar angrenzenden Energiespeicherzellen 8 der benachbarten Energiespeichereinheiten 7 jeweils derselbe vorbestimmte Abstand vorhanden ist. Die Verbindungselemente 13 sind jeweils mit den Anschlusslaschen 12a-d verschweißt oder verlötet. Der Abstand von Energiespeicherzellen 8 benachbarter Energiespeichereinheiten 7 entspricht dabei dem Abstand der Energiespeicherzellen 8 innerhalb der Energiespeichereinheiten 7. Durch die beschriebene Anordnung von Verbindungselementen 13 sind jeweils die gegenüberliegenden ersten und dritten Anschlusslaschen 12a, 12c an der Kopfseite des Energiespeichers 3 sowie die gegenüberliegenden zweiten und vierten Anschlusslaschen 12b, 12d an der Rückseite des Energiespeichers 3 nicht mit jeweiligen Verbindungselementen 13 verbunden. Stattdessen ist an diese Anschlusslaschen kopfseitig und rückseitig jeweils ein Anschlusselement 14 angeschlossen. Kopfseitig erfolgt darüber ein positiver und rückseitig ein negativer Leistungsabgriff. Die Anschlusselemente 14 weisen jeweils in Querrichtung des Energiespeichers 3 gegenüberliegende Kontaktabschnitte auf, welche auf die Seitenflächen 29a, 29 b umgekantet und mit den jeweiligen Anschlusslaschen 12a, 12c oder 12b, 12d verbunden sind. Die Kontaktabschnitte verlaufen dabei parallel zu den Verbindungselementen 13. Die Kontaktabschnitte sind kopfseitig und rückseitig jeweils durch ein in Querrichtung entlang der Stirnflächen verlaufendes Abgriffsselement miteinander verbunden. Das rückseitige Anschlusselement 14 weist darüber hinaus zwischen den Kontaktabschnitten und dem Abgriffselement jeweils nach innen umkantete Eckaussparungen auf, welche an die Außenkontur der an der rückseitigen Stirnfläche 32b befindlichen Energiespeichereinheit 7 angepasst sind und damit eine möglichst kompakte Bauform des Energiespeichers 3 gewährleisten. Die beschriebene Ausführungsform hat den Vorteil, dass durch diese ein Energiespeicher bereitgestellt wird, welcher bereits durch die an diesem verschweißten elektrischen Kontaktelemente wie beispielsweise die Zellverbinder 11a, 11b oder die Verbindungselemente 13 bzw. Anschlusselemente 14 in sich stabil ist und die durch die elektrischen Kontaktelemente verbundenen Energiespeicherzellen 8 bzw. Energiespeichereinheiten 7 ohne dazwischen angeordnete Abstandhalter so zueinander beabstandet sind, dass diese sich thermisch oder alterungsbedingt ausdehnen können, ohne dass der Energiespeicher und andererseits die Schweißverbindungen zwischen den Zellen und den Zellverbindern davon beschädigt werden könnten.

### Bezugszeichenliste

- 1: Energiespeichermodul
- 2: Gehäuse
- 3: Energiespeicher
- 4: Energiespeicheroberseite
- 5: Energiespeicherunterseite
- 7: Energiespeichereinheit
- 8: Energiespeicherzelle
- 9: Pluspol
- 10: Minuspol
- 11a: erster Zellverbinder
- 11b: zweiter Zellverbinder
- 12a: erste Anschlusslasche
- 12b: zweite Anschlusslasche
- 12c: dritte Anschlusslasche
- 12d: vierte Anschlusslasche
- 13: Verbindungselement
- 14: Anschlusselement
- 15: Boden
- 16: Deckel
- 17a: erste Seitenwand
- 17b: zweite Seitenwand
- 18: Kopfteil frontseitig
- 19: Kopfteil rückseitig
- 20: Versteifungsteil
- 21: Durchbruch
- 22: Kabelkanal
- 23: Befestigungselementaufnahmen
- 24: Federelement
- 25: Rastelement
- 26: Aussparung für Versteifungsteil
- 27: Fixierfenster
- 28: Eckaussparung
- 29a: erste Seitenfläche
- 29b: zweite Seitenfläche
- 30: Oberkante
- 31: Unterkante
- 32a: Stirnfläche kopfseitig
- 32b: Stirnfläche rückseitig
- 33: Kabeldurchführung
- 34: Bohrungen
- 35: Abkantung

## Patentansprüche

1. Energiespeichermodul (1) zum Speichern von elektrischer Energie, mit einem eine Oberseite (5), eine Unterseite (5) und einen im Wesentlichen rechteckigen Außenumfang aufweisenden Energiespeicher (3), wobei der Energiespeicher (3) eine Mehrzahl Energiespeichereinheiten (7) umfasst, von denen jede zumindest zwei benachbarte Energiespeicherzellen (8) mit zur Oberseite (4) und zur Unterseite (5) des Energiespeichers (3) ausgerichteten Polen (10, 11) aufweist, wobei die Pluspole (9) jeder der Energiespeichereinheiten (7) über einen ersten elektrisch leitenden Zellverbinder (11a) und die Minuspole (10) über einen zweiten elektrisch leitenden Zellverbinder (11b) miteinander verbunden sind, und der erste Zellverbinder (11a) mit einer ersten und der zweite Zellverbinder (11b) mit einer zweiten Anschlusslasche (12a, 12b) elektrisch verbunden sind, wobei die Anschlusslaschen (12a, 12b) auf einer einer ersten Seitenfläche (29a) des rechteckigen Außenumfangs des Energiespeichers (3) zugewandten Außenseite der Energiespeichereinheit (7) angeordnet sind, wobei jeweils die erste Anschlusslasche (12a) der Energiespeichereinheiten (7) über ein elektrisch leitendes Verbindungselement (13) mit der zweiten Anschlusslasche (12b) der jeweils in einer Längsrichtung der ersten Seitenfläche (29a) benachbarten Energiespeichereinheit (7) verbunden ist, **dadurch gekennzeichnet, dass** das Energiespeichermodul (1) ferner ein Gehäuse (2) mit einer der ersten Seitenfläche (29a) zugeordneten Seitenwand (17a) aufweist, an welcher die Verbindungselemente (13) so befestigt sind, dass diese an den ihnen zugeordneten Anschlusslaschen (12a, 12b) befestigbar sind.

2. Energiespeichermodul (1) nach Anspruch 1, wobei die Seitenwand (17a) jeweils den Anschlusslaschen (12a, 12b) zugeordnete und mit diesen fluchtende Fixierfenster (27) aufweist, über welche die Verbindungselemente (13) mit den Anschlusslaschen (12a, 12b) von der Gehäuseaußenseite her fixierbar sind.

3. Energiespeichermodul (1) nach Anspruch 2, wobei die Seitenwand (17a) je Fixierfenster (27) zumindest ein, insbesondere zwei, an das Fixierfenster (27) angrenzendes Rastelement (25) zum Fixieren des dem Fixierfenster (27) zugeordneten Verbindungselements (13) aufweist.

4. Energiespeichermodul (1) nach einem der Ansprüche 1 bis 3, wobei die Seitenwand (17a) ferner eine Mehrzahl, insbesondere eine der Anzahl der Energiespeicherzellen (8) entsprechende Anzahl, Federelemente (24) zum Erzeugen einer Vorspannung zwischen der Seitenwand (17a) und dem Energiespeicher (3) im montierten Zustand der Seitenwand (17a) aufweist.

5. Energiespeichermodul (1) nach einem der Ansprüche 1 bis 4, wobei das Gehäuse (2) ferner einen Boden (15) und/oder einen Deckel (16) umfasst, wobei die Seitenwand (17a) an ihrer Ober- und/oder Unterkante (30, 31) eine sich in Längsrichtung erstreckende Eckaussparung (28) zum vertikalen Abstützen und seitlichen Fixieren des Bodens (15) und/ oder des Deckels (16) aufweist.

6. Energiespeichermodul (1) nach Anspruch 5, wobei die Seitenwand (17a) ferner eine Mehrzahl zur Ober- und oder zur Unterkante (30, 31) weisende Befestigungselementaufnahmen (23) aufweist, über welche der Boden (15) und/oder der Deckel (16) auf den zugeordneten Eckaussparungen (28) fixierbar sind.

7. Energiespeichermodul (1) nach einem der Ansprüche 2 bis 6, wobei die Seitenwand (17a) auf ihrer dem Energiespeicher (3) abgewandten Seite ein sich im Wesentlichen in Längsrichtung der Seitenwand (17a) erstreckendes Versteifungsteil (20) aufweist, das eine Mehrzahl mit den Fixierfenstern (27) fluchtende Durchbrüche (21) aufweist.

8. Energiespeichermodul (1) nach einem der Ansprüche 1 bis 7, wobei das Gehäuse (2) an zumindest einer der Stirnflächen (32a, 32b) des rechteckigen Außenumfangs des Energiespeichers (3) ein die angrenzende Energiespeichereinheit (7) abdeckendes Kopfteil (18, 19) umfasst, welches eine Mehrzahl zur Ober- und oder zur Unterkante des Kopfteils (18, 19) weisende Befestigungselementaufnahmen (23) aufweist, über welche der Boden (15) und/oder der Deckel (16) am Kopfteilbar (18, 19) fixierbar sind.

9. Energiespeichermodul (1) nach Anspruch 8, wobei das Kopfteil (18, 19) über zumindest ein elektrisch leitendes Anschlusselement (14) mit der freien Anschlusslasche (12 a, 12b, 12c, 12d) der angrenzenden Energiespeichereinheit (7) verbunden ist.

10. Energiespeichermodul (1) nach einem der Ansprüche 1 bis 8, wobei der erste Zellverbinder (11a) mit einer dritten und der zweite Zellverbinder (11b) mit einer vierten Anschlusslasche (12C, 12d) elektrisch verbunden sind, welche auf einer einer zweiten, der ersten Seitenfläche (29a) gegenüberliegenden Seitenfläche (29b) des rechteckigen Außenumfangs zugewandten Außenseite der Energiespeichereinheit (7) angeordnet sind, wobei jeweils die dritte Anschlusslasche (12c) der Energiespeichereinheiten (7) über ein elektrisch leitendes Verbindungselement (13) mit der vierten Anschlusslasche (12d) der jeweils in einer Längsrichtung der ersten Seitenfläche (29) benachbarten Energiespeichereinheit (7) verbunden ist.

11. Energiespeichermodul (1) nach Anspruch 9, wobei das Gehäuse (2) ferner eine der zweiten Seitenfläche (29b) zugeordnete Seitenwand (17b) aufweist, welche dieselben Merkmale wie die gegenüberliegende erste Seitenwand (17a) aufweist.

12. Energiespeichermodul (1) nach einem der vorangehenden Ansprüche, welches sieben, zehn oder dreizehn Energiespeichereinheiten (7) umfasst, welche in Längsrichtung der Seitenwand (17a) nebeneinander angeordnet sind.

13. Energiespeichermodul (1) nach einem der vorangehenden Ansprüche, bei welchem die zumindest zwei Energiespeicherzellen (8) der Energiespeichereinheiten (7) in Längsrichtung der Seitenwand (17a, 17b) benachbart sind, wobei die Energiespeichereinheit (7) ferner eine Mehrzahl weiterer Paare aus jeweils in Längsrichtung der Seitenwand (17a, 17b) benachbarten Energiespeicherzellen aufweist, wobei sich die Mehrzahl Energiespeicherzellenpaare in einer Richtung quer zur Seitenwand (17a, 17b) erstreckt.

14. Energiespeichermodul (1) nach einem der vorangehenden Ansprüche, wobei jeweils alle Plus- und alle Minuspole (9, 10) der Energiespeicherzellen (8) zur Oberseite (4) oder zur Unterseite (5) des Energiespeichers (3) ausgerichtet sind, sodass die Verbindungselemente (13) benachbarte Energiespeichereinheiten (7) jeweils diagonal verbinden.

## Claims

1. An energy storage module (1) for storing electric energy, comprising an energy storage device (3) having an upper side (4), a lower side (5) and a substantially rectangular outer periphery, the energy storage device (3) including a plurality of energy storage units (7) each of which has at least two adjacent energy storage cells (8) with poles (10, 11) aligned with the top side (4) and the bottom side (5) of the energy storage device (3), the positive poles (9) of each of the energy storage units (7) being connected to one another via a first electrically conductive cell connector (11a) and the negative poles (10) being connected to one another via a second electrically conductive cell connector (11b) and the first cell connector (11a) is electrically connected to a first connecting lug (12a) and the second cell connector (11b) is electrically connected to a second connecting lug (12b), the connecting lugs (12a, 12b) being arranged on an outer side of the energy storage unit (7) facing a first side surface (29a) of the rectangular outer circumference of the energy storage device (3), wherein in each case the first connection lug (12a) of the energy storage units (7) is connected via an electrically conductive connecting element (13) to the second connection lug (12b) of that energy storage unit (7) which is adjacent to it in a longitudinal direction of the first side surface (29a), **characterized in that** the energy storage module (1) further comprises a housing (2) with a side wall (17a) associated with the first side surface (29a), to which the connecting elements (13) are fastened in such a way that they can be fastened to the connection lugs (12a, 12b) associated with them.

2. The energy storage module (1) according to claim 1, wherein the side wall (17a) has fixing windows (27) which are respectively associated with the connection lugs (12a, 12b) and aligned therewith and via which the connecting elements (13) can be fixed to the connection lugs (12a, 12b) from the outside of the housing.

3. The energy storage module (1) according to claim 2, wherein the side wall (17a) has at least one, in particular two, latching element (25) per fixing window (27) adjacent to the fixing window (27) for fixing the connecting element (13) associated with the fixing window (27).

4. The energy storage module (1) according to any one of claims 1 to 3, wherein the side wall (17a) further comprises a plurality, in particular a number corresponding to the number of energy storage cells (8), of spring elements (24) for generating a bias between the side wall (17a) and the energy storage module (3) in the assembled state of the side wall (17a).

5. The energy storage module (1) according to any one of claims 1 to 4, wherein the housing (2) further comprises a bottom (15) and/or a lid (16), wherein the side wall (17a) has at its upper and/or lower edge (30, 31) a longitudinally extending corner recess (28) for vertically supporting and laterally fixing the bottom (15) and/or the lid (16).

6. The energy storage module (1) according to claim 5, wherein the side wall (17a) further comprises a plurality of fastening element receptacles (23) facing the upper and or lower edge (30, 31), by means of which the bottom (15) and/or the lid (16) can be fixed on the associated corner recesses (28).

7. The energy storage module (1) according to any one of claims 2 to 6, wherein the side wall (17a) has, on its side facing away from the energy storage module (3), a stiffening part (20) extending substantially in the longitudinal direction of the side wall (17a) and having a plurality of apertures (21) aligned with the fixing windows (27).

8. The energy storage module (1) according to one of claims 1 to 7, wherein the housing (2) comprises, on at least one of the end faces (32a, 32b) of the rectangular outer circumference of the energy storage device (3), a head part (18, 19) covering the adjacent energy storage unit (7), which has a plurality of fastening element receptacles (23) pointing towards the upper and/or lower edge of the head part (18, 19), by means of which the bottom (15) and/or the lid (16) can be fixed to the head part bar (18, 19).

9. The energy storage module (1) according to claim 8, wherein the head part (18, 19) is connected to the free connecting lug (12 a, 12b, 12c, 12d) of the adjacent energy storage unit (7) via at least one electrically conductive terminal element (14).

10. The energy storage module (1) according to any one of claims 1 to 8, wherein the first cell connector (11a) is electrically connected to a third connecting lug (12c) and the second cell connector (11b) is electrically connected to a fourth connecting lug (12d), which are arranged on a second side surface (29b) of the rectangular outer circumference facing the first side surface (29a) of the energy storage unit (7), wherein the third connecting lug (12c) of the energy storage units (7) is respectively connected via an electrically conductive connecting element (13) to the fourth connecting lug (12d) of the energy storage unit (7) which is respectively adjacent in a longitudinal direction of the first side surface (29).

11. The energy storage module (1) according to claim 9, wherein the housing (2) further comprises a side wall (17b) associated with the second side surface (29b) and having the same features as the opposite first side wall (17a).

12. The energy storage module (1) according to any one of the preceding claims, comprising seven, ten or thirteen energy storage units (7) arranged side by side in the longitudinal direction of the side wall (17a).

13. The energy storage module (1) according to any one of the preceding claims, wherein the at least two energy storage cells (8) of the energy storage units (7) are adjacent in the longitudinal direction of the side wall (17a, 17b), the energy storage unit (7) further comprising a plurality of further pairs of energy storage cells each adjacent in the longitudinal direction of the side wall (17a, 17b), the plurality of energy storage cell pairs extending in a direction transverse to the side wall (17a, 17b).

14. The energy storage module (1) according to one of the preceding claims, wherein in each case all positive and all negative poles (9, 10) of the energy storage cells (8) are aligned with the upper side (4) or the lower side (5) of the energy storage device (3), so that the connecting elements (13) diagonally connect adjacent energy storage units (7) in each case.

## Revendications

1. Module de stockage d'énergie (1) pour le stockage d'énergie électrique, avec un accumulateur d'énergie (3) présentant un côté supérieur (5), un côté inférieur (5) et une périphérie extérieure globalement rectangulaire, dans lequel l'accumulateur d'énergie (3) comprend une pluralité d'unités de stockage d'énergie (7), chacune comprenant au moins deux cellules de stockage d'énergie (8) adjacentes avec des pôles (10, 11) orientés vers le côté supérieur (4) et le côté inférieur (5) de l'accumulateur d'énergie (3), dans lequel les pôles positifs (9) de chacune des unités de stockage d'énergie (7) sont reliés entre eux par l'intermédiaire d'un premier connecteur de cellules électroconducteur (11a) et les pôles négatifs (10) sont reliés entre eux par l'intermédiaire d'un deuxième connecteur de cellules électroconducteur (11b) et le premier connecteur de cellules (11a) et le deuxième connecteur de cellules (11b) sont reliés électriquement respectivement avec une première et une deuxième pattes de raccordement (12a, 12b), dans lequel les pattes de raccordement (12a, 12b) sont disposées sur un côté extérieur de l'unité de stockage d'énergie (7) orienté vers une première surface latérale (29a) de la périphérie extérieure rectangulaire de l'accumulateur d'énergie (3), dans lequel respectivement la première patte de raccordement (12a) des unités de stockage d'énergie (7) est reliée, par l'intermédiaire d'un élément de liaison électroconducteur (13), avec la deuxième patte de raccordement (12b) de l'unité de stockage d'énergie (7) respectivement adjacente dans une direction longitudinale de la première surface latérale (29a), **caractérisé en ce que** le module de stockage d'énergie (1) comprend en outre un boîtier (2) avec une paroi latérale (17a) correspondant à la première surface latérale (29a), sur laquelle les éléments de liaison (13) sont fixés de sorte que ceux-ci peuvent être fixés aux pattes de raccordement (12a, 12b) correspondantes.

2. Module de stockage d'énergie (1) selon la revendication 1, dans lequel la paroi latérale (17a) comprend des fenêtres de fixation (27) correspondant respectivement aux pattes de raccordement (12a, 12b) et alignées avec celles-ci, par l'intermédiaire desquelles les éléments de liaison (13) peuvent être fixés avec les pattes de raccordement (12a, 12b) à partir du côté extérieur du boîtier.

3. Module de stockage d'énergie (1) selon la revendication 2, dans lequel la paroi latérale (17a) comprend, au niveau de chaque fenêtre de fixation (27), au moins un, de préférence deux éléments d'encliquetage (25) adjacents aux fenêtres de fixation (27), pour la fixation de l'élément de liaison (13) correspondant à la fenêtre de fixation (27).

4. Module de stockage d'énergie (1) selon l'une des revendications 1 à 3, dans lequel la paroi latérale (17a) comprend en outre une pluralité, plus particulièrement un nombre correspondant au nombre de cellules de stockage d'énergie (8), d'éléments de ressort (24) pour la production d'une précontrainte entre la paroi latérale (17a) et l'accumulateur d'énergie (3) dans l'état monté de la paroi latérale (17a).

5. Module de stockage d'énergie (1) selon l'une des revendications 1 à 4, dans lequel le boîtier (2) comprend en outre un fond (15) et/ou un couvercle (16), dans lequel la paroi latérale (17a) comprend, au niveau de son arête supérieure et/ou inférieure (30, 31), un évidement angulaire (28) s'étendant dans la direction longitudinale pour l'appui vertical et la fixation latérale du fond (15) et/ou du couvercle (16).

6. Module de stockage d'énergie (1) selon la revendication 5, dans lequel la paroi latérale (17a) comprend en outre une pluralité de logements d'éléments de fixation (23), orientés vers l'arête supérieure et/ou inférieure (30, 31), par l'intermédiaire desquels le fond (15) et/ou le couvercle (16) peuvent être fixés sur les évidements angulaires (28) correspondants.

7. Module de stockage d'énergie (1) selon l'une des revendications 2 à 6, dans lequel la paroi latérale (17a) comprend, sur son côté opposé à l'accumulateur d'énergie (3), une partie de rigidification (20) s'étendant globalement dans la direction longitudinale de la paroi latérale (17a), qui comprend une pluralité de passages (21) alignés avec les fenêtres de fixation (27).

8. Module de stockage d'énergie (1) selon l'une des revendications 1 à 7, dans lequel le boîtier (2) comprend, au niveau d'au moins une des surfaces frontales (32a, 32b) de la périphérie extérieure rectangulaire de l'accumulateur d'énergie (3), une partie de tête (18, 19), recouvrant l'unité de stockage d'énergie (7) adjacente, qui comprend une pluralité de logements d'éléments de fixation (23), orientés vers l'arête supérieure et/ou inférieure de la partie de tête (18, 19), par l'intermédiaire desquels le fond (15) et/ou le couvercle (16) peuvent être fixés à la partie de tête (18, 19).

9. Module de stockage d'énergie (1) selon la revendication 8, dans lequel la partie de tête (18, 19) est reliée, par l'intermédiaire d'au moins un élément de raccordement électroconducteur (14), avec la patte de raccordement (12a, 12b, 12c, 12d) libre de l'unité de stockage d'énergie (7) adjacente.

10. Module de stockage d'énergie (1) selon l'une des revendications 1 à 8, dans lequel le premier connecteur de cellules (11a) et le deuxième connecteur de cellules (11b) sont reliés électriquement respectivement avec une troisième et une quatrième pattes de raccordement (12c, 12d), qui sont disposées sur un côté extérieur de l'unité de stockage d'énergie (7), orienté vers une deuxième surface latérale (29b), opposée à la première surface latérale (29a), de la périphérie extérieure rectangulaire, dans lequel, respectivement la troisième patte de raccordement (12c) des unités de stockage d'énergie (7) est reliée, par l'intermédiaire d'un élément de liaison électroconducteur (13), avec la quatrième patte de raccordement (12d) de l'unité de stockage d'énergie (7) respectivement adjacente dans une direction longitudinale de la première surface latérale (29).

11. Module de stockage d'énergie (1) selon la revendication 9, dans lequel le boîtier (2) comprend en outre une paroi latérale (17b) correspondant à la deuxième surface latérale (29b), qui présente les mêmes caractéristiques que la première paroi latérale (17a) opposée.

12. Module de stockage d'énergie (1) selon l'une des revendications précédentes, qui comprend sept, dix ou treize unités de stockage d'énergie (7), qui sont juxtaposées dans la direction longitudinale de la paroi latérale (17a).

13. Module de stockage d'énergie (1) selon l'une des revendications précédentes, dans lequel les au moins deux cellules de stockage d'énergie (8) des unités de stockage d'énergie (7) sont adjacentes dans la direction longitudinale de la paroi latérale (17a, 17b), dans lequel l'unité de stockage d'énergie (7) comprend en outre une pluralité d'autres paires de cellules de stockage d'énergie respectivement adjacentes dans la direction longitudinale de la paroi latérale (17a, 17b), dans lequel la pluralité de paires de cellules de stockage d'énergie s'étend dans une direction transversale par rapport à la paroi latérale (17a, 17b).

14. Module de stockage d'énergie (1) selon l'une des revendications précédentes, dans lequel respectivement tous les pôles positifs et tous les pôles négatifs (9, 10) des cellules de stockage d'énergie (8) sont orientés vers le côté supérieur (4) ou vers le côté inférieur (5) de l'accumulateur d'énergie (3), de sorte que les éléments de liaison (13) relient les unités de stockage d'énergie (7) de manière diagonale.
